# EUROPÄISCHE PATENTSCHRIFT

(11) **EP 3 623 893 B1**
(45) Veröffentlichungstag und Bekanntmachung des Hinweises auf die Patenterteilung: **23.06.2021**
(21) Anmeldenummer: 18194132.9
(22) Anmeldetag: 12.09.2018
(51) Int. Cl.: G05D 1/00

(54) **VERFAHREN ZUM LOKALISIEREN EINER STÖRUNG EINES SYSTEMS**
METHOD FOR LOCATING A FAULT OF A SYSTEM
PROCÉDÉ DE LOCALISATION D'UNE DÉFAILLANCE D'UN SYSTÈME

(43) Veröffentlichungstag der Anmeldung: 18.03.2020
(73) Patentinhaber: vaireco GmbH, 78467 Konstanz (DE); Bernot, Gerhard, 78464 Konstanz (DE)
(72) Erfinder: Bernot, Gerhard, 78464 Konstanz (DE); Herbst, Wolfgang, 78464 Konstanz (DE); Varner, Kenneth, 78464 Konstanz (DE)
(74) Vertreter: Heyerhoff Geiger & Partner Patentanwälte PartGmbB

(56) Entgegenhaltungen:
- WO-A1-2010/026268
- CN-A- 108 419 056

## Beschreibung

Die Erfindung betrifft ein Verfahren zum Lokalisieren einer Störung eines Systems, bei dem ein mobiler Träger mit einer Kamera Grobbilder vom System aufnimmt und aus den Grobbildern gewonnene Bildinformation drahtlos an einen bodengebundenen Server übertragen wird.

Solche Verfahren werden beispielsweise in den Druckschriften CN 108 419 056 A sowie WO 2010/026268 A1 gezeigt.

Große technische Anlagen, beispielsweise Windparks oder Solaranlagen mit einem großen Feld von PV-Modulen, können heute von unbemannten Fluggeräten, beispielsweise Multikoptern, auf technische Defekte untersucht werden. Hierfür ist das Fluggerät mit einer Kamera ausgestattet, die während des Flugs Bilder von der Anlage beziehungsweise einem interessierenden Bauteil erstellt und zur Defekterkennung auf einer Speicherkarte an Bord des Fluggeräts abspeichert. Nach dem Flug werden die aufgenommenen Bilder von der Speicherkarte ausgelesen und auf Defekte hin überprüft. Auf eine aufwändige Begehung der Anlage kann verzichtet werden.

Es ist eine Aufgabe der vorliegenden Erfindung, ein verbessertes Verfahren zur zügigen Lokalisierung einer Störung eines Systems anzugeben.

Diese Aufgabe wird durch die unabhängigen Ansprüche gelöst. Die folgenden Darstellungen und Beispiele dienen lediglich der Illustration der Erfindung.

Die Erfindung geht von der Überlegung aus, dass zur Überprüfung einer Großanlage auf technische Fehler unter Umständen viele tausend Bilder aufgenommen werden, deren Auswertung sich langwierig gestalten kann. Auf diese Weise kann es ein oder sogar zwei Tage dauern, bis ein Defekt erkannt und dadurch behoben werden kann. In dieser langen Zeitspanne kann sich der Defekt vergrößern und erheblichen Schaden anrichten oder, wie bei einem Ausfall eines Teils einer Solaranlage, durch Leistungseinschränkungen zu einem finanziellen Ausfall des Betreibers führen.

Mithilfe der Erfindung kann die Störung unmittelbar erkannt werden und Informationen über Position und Art der Störung können sehr schnell an den Betreiber der Anlage übermittelt werden. Die Anlage kann schnell repariert werden und es können finanzielle Verluste oder größere Schäden vermieden werden. Zudem kann ein hoher Rechenaufwand, der bei einer Auswertung von vielen tausend Bildern zur Auffindung des Schadens nötig wäre, vermieden werden.

Die Störung des Systems kann von einem Fachmann erkannt werden, der Zugriff auf die Bildinformation auf dem Server oder daraus abgeleiteten Daten hat. Er kann das Signal auslösen, wodurch das höher aufgelöste Bild der Störung, gegebenenfalls zusammen mit den Geokoordinaten des mobilen Trägers und/oder der Störung, gespeichert wird, sodass die Störung genauer analysiert und durch die Koordinaten lokalisiert werden kann. Getriggert durch das Signal werden insofern Angaben über die Störung an den bodengebundenen Server übertragen, sodass hierdurch eine schnelle Behebung der Störung ohne großen Rechenaufwand erfolgen kann.

Üblicherweise werden von einem unbemannten Fluggerät aufgenommene Bilddaten an eine Anzeige eines Piloten beziehungsweise Bedieners des Fluggeräts am Boden übertragen, der die Bilder somit während des Flugs direkt auf einen Schaden überprüfen kann. Bei Erkennen des Schadens kann er das Signal auslösen, sodass das im mobilen Träger gespeicherte höher aufgelöste Feinbild der Störung und Geokoordinaten des mobilen Trägers zum Server gesendet werden.

Hierbei bestehen jedoch die Nachteile, dass der Bediener die Flugsteuerung und die Bildanalyse durchführen muss, was zu einem Übersehen einer Störung führen kann. Außerdem sind manche Fehler in komplexen Anlagen schwer zu finden, sodass hierfür ein Fachmann sinnvoll ist. Dieser müsste zur Anlage kommen und zudem das unbemannte Fluggerät fliegen. Einfacher und kostengünstiger ist es, wenn die Flugsteuerung und die Bildanalyse unabhängig voneinander erfolgen, zweckmäßigerweise durch unterschiedliche Einheiten, wie einen Bediener und einen Beobachter, wie die Einheiten im Folgenden auch genannt werden. Beide, Bediener und/oder Beobachter, können hierbei eine Person oder eine Recheneinheit sein, die die Tätigkeit der Flugsteuerung beziehungsweise der Bildanalyse autonom ausübt.

Durch die Erfindung wird die Störung durch eine Auswertung derjenigen Bildinformation erkannt, die an den bodengebundenen Server geschickt wurde. Hierauf oder auf daraus abgeleiteten Daten hat ein externer Beobachter Zugriff, extern, weil er nicht der Bediener des mobilen Trägers ist. Zwar kann die Bildinformation, die einem Bediener des Fluggeräts beispielsweise auf seinem Steuerungsgerät angezeigt wird, die gleiche sein, beispielsweise ein Live-Stream der vom mobilen Träger aufgenommenen Bilder. Doch die Auswertung erfolgt anhand von solchen Daten, die an den Server geschickt wurden, und nicht anhand von gleichen Daten, die beispielsweise einem Bediener des Trägers direkt vom Träger zugeschickt werden.

In einer vorteilhaften Ausführungsform der Erfindung ist das System eine technische Anlage mit einer Vielzahl von Geräten und/oder Anlageeinheiten. Ebenfalls möglich ist ein Bauwerk als System, beispielsweise eine Brücke, eine Mauer oder ein Gebäude. Die Störung des Systems kann ein Defekt in einer technischen Anlage sein, beispielsweise eine defekte Komponente der Anlage. Bei einem Bauwerk kann es eine defekte Komponente der Anlage sein, wie ein Riss in einem Betonbauteil, ein herausgebrochener Stein, oder eine Beschädigung einer Bauwerkshülle.

Das System kann jedoch auch ein Ökosystem sein, beispielsweise ein Wald oder ein Gewässer. Eine Störung kann ein Feuer oder eine andere erhitzte Stelle im Wald sein, oder Öl auf dem Gewässer oder Plastik im Gewässer. Weiter kann das System eine Ansammlung von Menschen sein oder ein urbaner Organismus, wie eine Stadt oder ein Stadtteil oder dergleichen. Hier kann die Störung ein unerwünschter Zustand des Systems sein, wie ein Feuer in einem Gebäude, ein Stau auf einer Autobahn oder eine hilfebedürftige Person innerhalb des Systems, beispielsweise ein Verschütteter in einer Schneelawine oder eine gesuchte Person in einem Ökosystem, wie ein vermisster Bergsteiger.

Das Signal wird vom Beobachter zweckmäßigerweise beim Erkennen der Störung ausgelöst und/oder wenn das Fluggerät in einer bekannten Stelle zur Störung positioniert ist. Das Auslösen kann durch einen Knopfdruck oder das Berühren einer berührungssensitiven Schaltfläche oder einen ähnlichen Vorgang erfolgen, bei einer automatischen Erkennung automatisiert, wodurch die Signalerzeugung ausgelöst wird. Die Bildinformation ist beispielsweise ein von der Kamera aufgenommenes Bild oder ein Film, der vom Träger insbesondere im Live-Modus an den Server übertragen werden kann. Beispielsweise ist die Bildinformation eine Live-Übertragung des Gesichtsfelds der Kamera des Trägers, oder eines Teils davon.

Je nach Aufgabenbereich kann die Bildinformation im infraroten und/oder visuellen Spektralbereich aufgenommen werden, um beispielsweise thermische Unterschiede von Solarmodulen unmittelbar in der Bildinformation sichtbar zu machen. Entsprechend kann die Kamera eine visuelle Kamera oder eine Infrarotkamera mit einem Infrarotdetektor sein. Die Kamera kann auch ein Kamerasystem mit zwei Detektoren sein, von denen einer im visuellen und einer im infraroten Spektralbereich aufnimmt.

Durch das Signal schickt der Träger das höher aufgelöste Bild der Störung entweder direkt an den Server oder trennt es aus einem Bilddatenstrom, der nachfolgend gelöscht wird und bewahrt es so vor der Löschung, sodass es später an den Server geschickt werden kann, beispielsweise wenn der Träger gelandet ist und ein Datenspeicher ausgelesen wird. Es ist also vorteilhaft, wenn im Träger ausgelöst durch das Signal ein vorbestimmtes Bild der Kamera des Trägers aus einem Speichermedium des Trägers ausgelesen und als Abbildung der Störung zum Server gesendet wird.

Ist der Träger ein Fluggerät, so ist die Bilder aufnehmende Kamera des Trägers zweckmäßigerweise senkrecht nach unten ausgerichtet bei waagerechtem Träger. Auf diese Weise entsprechen seine zweidimensionalen Koordinaten - die Flughöhe also ausgenommen - denen des Bildzentrums des von der Kamera aufgenommenen Bilds beziehungsweise Films. Liegt die Störung in der Bildmitte, so kann die Position des Fluggeräts mit derjenigen der Störung gleichgesetzt werden.

Die Bestimmung der Geokoordinaten der Störung kann auf verschiedene Weisen erfolgen, die einzeln oder in Kombination miteinander ausgeführt werden können. In einer ersten Möglichkeit werden die Koordinaten der Störung bestimmt aus Positionskoordinaten des Trägers. Fliegt dieser beispielsweise genau über der Störung, so reichen die zweidimensionalen Koordinaten des Trägers aus, also ohne eine Flughöhe, um die Position der Störung zu bestimmen, vorausgesetzt sie liegt auf Bodenhöhe.

Ist eine senkrechte Lage des Trägers über der Störung schwer zu erreichen oder unerwünscht, so kann eine Ausrichtung der Kamera im Raum und eine Entfernung der Kamera zum Ort der Störung hinzugezogen werden. Die Position der Bildmitte auf einer Erdoberfläche kann hierdurch ermittelt werden. Die Ausrichtung der Kamera im Raum kann mithilfe einer sogenannten Initial Measurement Unit (IMU) bestimmt werden oder einer anderen Einheit mit Beschleunigungssensoren, aus deren Signalen die Ausrichtung des Trägers oder der Kamera im Raum bestimmbar ist. Ist die Kamera relativ zum übrigen Träger verschwenkbar, so sollte auch der Schwenkwinkel berücksichtigt werden.

Liegt die Abbildung der Störung nicht in der Bildmitte, so ist es sinnvoll, zusätzlich die Lage der Abbildung der Störung in zumindest einem Bild zu bestimmen und zur Positionsbestimmung mitzuverwenden.

Zusammenfassend ist es sinnvoll, wenn der Träger Sensoren zur Positionsbestimmung der Störung aufweist. Solche Sensoren können sein:
- Ein GNSS-Sensor, z.B. GPS-Sensor, zur Bestimmung der Position des Trägers im Raum.
- Ein Lagesensor zur Bestimmung der Lage beziehungsweise Ausrichtung des Trägers im Raum. Dies kann eine IMU sein.
- Ein Winkelsensor zur Bestimmung der Ausrichtung der Kamera zum Träger. Die Ausrichtung wird zweckmäßigerweise in zweidimensionalen Polarkoordinaten bestimmt.
- Einen Entfernungssensor zur Bestimmung der Entfernung von der Kamera zu einem Objekt, das in der Bildmitte des Kamerabilds aufgenommen wird.

Aus dem Winkelsensor und Entfernungssensor können die dreidimensionalen Polarkoordinaten des Objekts bestimmt werden. Diese sind relativ zum Träger bestimmt. Durch den Lagesensor können die Polarkoordinaten vom Trägerkoordinatensystem in ein geostationäres Koordinatensystem übertragen werden. Durch den GNSS-Sensor kann das geostationäre Koordinatensystem in ein geostationäres Koordinatensystem mit bekannter absoluter Lage überführt werden.

Zur Bestimmung der Position der Störung ist es außerdem sinnvoll, die Lage der Störungsabbildung in einem oder mehreren Bildern zu bestimmen, sodass die Relativposition zum in der Bildmitte abgebildeten Punkts oder Objekts bekannt ist.

Zur Bestimmung der Kamera zum Ort der Störung kann ein Entfernungssensor verwendet werden, wie ein Lasersensor, der beispielsweise parallel zur Kamera-Bildachse ausgerichtet ist. Ein solcher Sensor kann eingespart werden, wenn die reale Ausdehnung eines im Bild abgebildeten Objekts bekannt ist. Aus dessen Ausdehnung der Abbildung des Objekts im Bild kann nun trigonometrisch die Entfernung berechnet werden. Hierfür sollten optische Daten der Kamera bekannt sein, wie die Blickfeldgröße des Bildes.

Gerade bei einem Flug des Trägers am oder über dem System kann es vorkommen, dass der Träger durch Wind stark schwankt, sodass die Kamera von Bild zu Bild unterschiedlich ausgerichtet ist. Eine Trägerbewegung kann zwar gegebenenfalls durch eine Sensoreinheit zur Erfassung von Beschleunigungen erfasst werden, wie eine IMU, doch entsprechende Korrekturrechnungen zur Bestimmung der Ausrichtung der Kamera können fehlerbehaftet sein. Dieses Problem kann zumindest abgemildert werden, wenn die Positionsdaten der Störung von einer Auswerteeinheit im Träger jeweils aus mehreren Bildern ermittelt werden und aus den ermittelten Positionsdaten die Ortskoordinaten der Störung berechnet werden. Beispielsweise können die mehreren Positionsdaten gemittelt werden, um Schwankungsbewegungen auszugleichen. Auch eine Gewichtung der Positionsdaten der einzelnen Bilder mithilfe von Beschleunigungsdaten, z.B. von einer IMU, ist möglich.

Bei einer Inspektion von Brückenelementen, Fassadenteilen oder dergleichen ist die Kamera zweckmäßigerweise waagerecht ausgerichtet. Auf diese Weise kann mithilfe eines Höhensensors des Trägers auch die Höhe eines im Bild aufgenommenen Gegenstands über dem Boden beziehungsweise über dem Meeresspiegel bestimmt werden. Generell ist ein Höhensensor im Träger bei waagerechten Inspektionen hilfreich. Der Höhensensor kann Teil eines Datenmoduls sein, das Bestandteil des Trägers ist oder in einem zusätzlichen Datenmodul enthalten ist, das zu dem ansonsten voll einsatzfähigen Träger zusätzlich vorhanden ist.

Bei waagerechter oder schräger Inspektion sollte der Träger nahe an das aufgenommene Bauteil herangeführt werden, damit die Koordinaten des Trägers ähnlich mit denen des aufgenommenen Bauteils sind. Ist dies nicht sinnvoll, so kann der Träger mit einem Kompass oder einem äquivalenten Richtungsgerät und einem Entfernungsmesser ausgerüstet sein, der in Blickrichtung der Kamera gerichtet ist. Durch die Koordinaten des Trägers, die Blickrichtung der Kamera und die Entfernung des Trägers zum abgebildeten Bauteil können dessen Koordinaten ausreichend genau bestimmt werden.

Der Server kann ein Computerprogramm oder ein Computer sein, der Computerfunktionalitäten, wie Dienstprogramme, Daten oder andere Ressourcen bereitstellt, damit zumindest ein anderer Computer oder Programme darauf zugreifen können. Beispielsweise greift der Computer des Beobachters auf den Server zu, um Bilddaten abzurufen. Der Server kann auch ein Laptop in einem Fahrzeug sein, der die Bildinformation, das Feinbild der Störung und/oder Geokoordinaten verarbeitet und einem anderen Computer oder Programm zur Verfügung stellt.

Der Server ist ein bodengebundenes System oder ein Teil davon, das zweckmäßigerweise zur Einleitung einer Behebung der Störung vorbereitet und mit hierfür notwendigen Programmen ausgerüstet ist. Der Server kann ein Managementsystem eines Systembetreibers, ein Rechner einer Leitstelle oder dergleichen sein. Beispielsweise erzeugt der Server einen Reparaturauftrag, der die Schadensart und den Schadensort der Störung beinhaltet.

Der Träger kann ein unbemanntes Fluggerät sein, zweckmäßigerweise ein Micro-UAV (Unmanned Air Vehicle), insbesondere unter 50 kg Gesamtgewicht. Es kann ein Drehflügler sein, wie ein Multikopter, oder ein sogenannter unbemannter Lighter than Air Carrier (LTA), also ein durch Verdrängungsauftrieb in der Luft schwebend gehaltenes Fluggerät, wie eine Ballondrohne.

Leichte unbemannte Fluggeräte umfassen üblicherweise einen GPS-Empfänger zur Bestimmung des eigenen Standorts, einen Empfänger zur Flugsteuerung und einen Sender zur Übertragung von Kameradaten an den Bediener. Diese Geräte können auch bei dem durch die Erfindung verwendeten Träger zur Bestimmung der Geokoordinaten, zum Empfangen des Signals und zur Übersendung der Abbildung der Störung verwendet werden. Hierfür bedarf es jedoch eines Eingriffs in den Träger, um an die entsprechenden Datenschnittstellen zu gelangen oder diese zu erzeugen. Dieser Aufwand kann vermieden werden, wenn der Träger einen zweiten Empfänger aufweist, der zum Empfangen des Signals verwendet wird, wohingegen der erste Empfänger zur Bewegungssteuerung verwendet wird, also zur Entgegennahme der Bewegungsbefehle eines Bedieners beziehungsweise eines Steuergeräts. Mit gleichem Vorteil umfasst der Träger zweckmäßigerweise einen zweiten GPS-Empfänger, dessen Koordinaten auf Anforderung durch das Signal an den Server weitergegeben werden. Ein zur Bewegungssteuerung verwendeter erster GPS-Empfänger muss nicht verwendet werden. Mit gleichem Vorteil ist am Träger ein zweiter Sender vorhanden, der unabhängig von dem Sender ist, der die Bildinformation an den Server und/oder einen Bediener sendet und die Abbildung der Störung und die Geokoordinaten des Trägers an den Server übermittelt.

Die Übermittlung der Geokoordinaten und der Abbildung der Störung kann unmittelbar an den Server erfolgen, beispielsweise über eine Mobilfunkverbindung, wie eine GSM-Verbindung, UMTS-Verbindung oder LTE-Verbindung. Hierfür kann der Träger ein fernkommunikationstaugliches Kommunikationsmodul aufweisen, wie ein LTE-Modul. In einer anderen Möglichkeit werden die Daten über ein Zwischengerät an den Server übertragen, die Daten werden also vom Träger an das Zwischengerät und vom Zwischengerät an den Server übertragen. Das Zwischengerät ist zweckmäßigerweise eine mobile Kommunikationseinheit am Ort eines Bedieners, beispielsweise ein Smartphone, ein Tablet oder eine ähnliche Einrichtung zur Kommunikation. Die Datenübertragung zwischen dem Träger und dem Zwischengerät erfolgt zweckmäßigerweise über ein lokales Funknetz beziehungsweise ein lokales Datenübertragungsverfahren, beispielsweise WLAN, wohingegen die Übertragung vom Zwischengerät zum Server in einem Fernübertragungsverfahren erfolgen sollte, beispielsweise über ein Mobilfunknetz.

Während die Bildinformation zweckmäßigerweise im sichtbaren Spektralbereich gewonnen wird, die entsprechende Kamera also im visuellen Spektralbereich empfindlich ist, wird die Abbildung der Störung vorteilhafterweise im infraroten Spektralbereich aufgenommen, sodass diese also beispielsweise eine thermografische Abbildung der Störung ist. Auf diese Weise kann ein heißes Gerät, beispielsweise ein defekter Trafo einer Umspannstation, ein defekter PV-String in einer PV-Großanlage oder ein Brand, gut charakterisiert werden.

Wie beschrieben, kann das System eine technische Anlage und die Störung ein Defekt eines Elements der Anlage sein. Die Störung ist beispielsweise ein Riss in einem Windradrotor eines Windparks oder ein Riss in einem Isolator einer Hochspannungsleitung. Sie kann auch ein Defekt in einer Brücke sein, einem Brückenpfeiler, einer Tragkonstruktion, einem Seil, z.B. einer Hängebrücke, einer Seilbahn oder eines Krans. Ebenfalls möglich ist eine defekte elektrische Anlage in einem Verkehrsmittel oder in einem urbanen Umfeld, ein fehlerhaftes Modul einer PV-Anlage oder dergleichen.

Auch im Bauwesen ist die Erfindung hilfreich, z.B. zur Inspektion eines Gebäudes, z.B. einer Fassade eines Hochhauses, oder einer Straße, bei der z.B. die Homogenität des Asphalts untersucht wird. Auch eine Gaslecksuche kann mithilfe der Erfindung effizient ausgeführt werden, wenn eine IR-Kamera verwendet wird, mit der das gesuchte Gas abgebildet wird. Allgemein kann die Störung jede Auffälligkeit sein, die von einer Norm abweicht und/oder einen Defekt eines Bauteils darstellt. Beispielhaft seien erwähnt: Schäden, Fehler, Verschmutzungen, oder Farb- oder Formabweichungen.

Wie bereits ausgeführt, kann der mobile Träger ein unbemanntes Fluggerät sein, das das System überfliegt beziehungsweise an das System heranfliegt und von einem Bediener vom Boden aus gesteuert wird. Der Bediener kann eine Person sein, die den Träger mit Sichtkontakt fliegt. Falls dies rechtlich zulässig ist, kann der Bediener den Träger auch von einem Gebäude aus steuern, also ohne unmittelbaren Sichtkontakt. Ebenfalls möglich ist es, dass der Bediener ein Steuersystem ist, das den Träger autonom steuert, zum Beispiel entlang einer vorbestimmten Fahr- oder Flugroute.

Um einen Beobachter effizient einsetzen zu können, ist es vorteilhaft, wenn dieser nicht in der Nähe des Trägers sein muss. Er kann in einem Gebäude sein, aus dem heraus er die Störung anhand der Bildinformation entdeckt. Dort kann von ihm auch das Signal ausgelöst werden. Das Gebäude ist entfernt vom Träger, zweckmäßigerweise mehr als einen Kilometer vom mobilen Träger entfernt.

Die Aktivität des Beobachters muss nicht auf das Beobachten beschränkt sein. Der Beobachter kann dem Bediener Anweisungen zum Steuern des Trägers geben. Hat der Beobachter beispielsweise eine Störung gefunden oder meint, dass an einem Ort eine Störung sein könnte, kann der den Träger über Kommandos an den Bediener zurück zur Störung leiten, sodass weitere Bilder der Störung aufgenommen werden, beispielsweise aus einer geringeren Flughöhe als zuvor.

Weiter ist es vorteilhaft, wenn der Träger über ein Datenmodul mit einem GPS-Empfänger und einem Sender die Geokoordinaten und die Abbildung der Störung übermittelt. Das Datenmodul kann ein Modul sein, das ein Hersteller des Trägers bereits serienmäßig zum Bereitstellen der üblichen, insbesondere alle herstellerseitig bereitgestellten Funktionen des Trägers im Träger verbaut. Auf den Eingriff in möglicherweise schwer zugängliche Schnittstellen kann jedoch verzichtet werden, wenn es ein zusätzliches Datenmodul ist, bei dem der Sender und GPS-Empfänger zusätzlich vorhanden sind. Es ist dann zweckmäßig, wenn dieses Datenmodul ein zusätzliches Datenmodul zu einem ersten Datenmodul ist, das ebenfalls einen GPS-Empfänger und/oder einen Sender aufweisen kann, mit dem beispielsweise die Bildinformation gesendet wird. Beide Datenmodule sind vorteilhafterweise unabhängig voneinander. Auf die Einrichtung einer separaten Schnittstelle von und zum handelsüblich erworbenen Träger kann verzichtet werden.

Die Abbildung der Störung kann zügig und einfach gesendet werden, wenn das Fluggerät ausgelöst durch das Signal ein vorbestimmtes Bild der Kamera des Fluggeräts aus einem Speichermedium des Fluggeräts ausgelesen und als Abbildung der Störung gesendet wird. Auf die Einrichtung einer separaten Bildschnittstelle kann verzichtet werden und das Abbild der Störung kann von dem Speichermedium, beispielsweise einer Speicherkarte, in einfacher Weise und zügig ausgelesen und verwendet werden.

Ebenfalls möglich und vorteilhaft ist es, wenn im Träger ein von einer Kamera des Trägers aufgenommener Flugfilm vor seiner Speicherung auf einem Speichermedium des Trägers abgegriffen wird. Der Flugfilm kann auf einem zusätzlichen Speicher zwischengespeichert und beispielsweise in einer Schleife stets überschrieben werden, sodass die Größe des Zwischenspeichers gering bleiben kann. Ausgelöst durch das Signal kann ein vorbestimmtes Bild, beispielsweise das zuletzt erzeugte Bild, aus dem Flugfilm aus dem Zwischenspeicher entnommen und als Abbildung der Störung gesendet werden.

Das Maß der Übereinstimmung der Geokoordinaten des Fluggeräts mit den Geokoordinaten der Störung hängt im Wesentlichen ab vom Abstand des Trägers von der Störung und der Aufnahmerichtung. Bei einem Flug des Trägers in starkem Wind könnte der Träger schräg stehen, auch bei geostationärem Stillstand, und die relativ zum Träger senkrecht nach unten ausgerichtete Kamera könnte in Wirklichkeit schräg stehen, da der gesamte Träger durch das Ausgleichen der Windgeschwindigkeit schräg in der Luft steht. In einem solchen Fall, oder allgemein, wenn der Bediener Zweifel an der Ortsgenauigkeit seiner Aufnahme beziehungsweise der Trägerkoordinaten hat, kann er den Träger nach unten absenken, um den Abstand über der Störung zu verringern und damit die Positionsbestimmung zu präzisieren.

Entsprechend ist es vorteilhaft, wenn der Träger, ausgelöst durch das Signal, einen vorgegebenen Flugweg verlässt, ein Stück weit in Bildaufnahmerichtung der Abbildung der Störung absinkt und entweder erst jetzt die Geokoordinate bestimmt und zweckmäßigerweise sendet, oder eine weitere Geokoordinate, beispielsweise als Nahkoordinate, aufnimmt und zweckmäßigerweise sendet. Mit gleichem Vorteil kann eine Nahaufnahme der Störung aufgenommen und als Abbildung der Störung oder als zusätzliche Abbildung der Störung an den Server übertragen werden. Der Träger kann nun wieder auf seine vorgegebene Flugbahn aufsteigen und beispielsweise nach einer weiteren Störung suchen.

Ein zuverlässiges Verfahren zum Bestimmen der Geokoordinaten der Störung besteht darin, dass der Träger mehrere Feinbilder der Störung, insbesondere zusammen mit Geokoordinaten der Aufnahmepunkte der Feinbilder, an den Server sendet. Aus den Feinbildern kann nun mittels Fotogrammetrie ein 3D-Modell des Aufnahmegegenstands mit der Störung erstellt werden. Sind die Geokoordinaten des Aufnahmegegenstands bekannt, so kann aus dem 3D-Modell auf die Geokoordinaten der Störung geschlossen werden. Doch auch wenn die Geokoordinaten des Aufnahmegegenstands nicht bekannt sind, können die Geokoordinaten der Störung aus den Geokoordinaten der Aufnahmepunkte der Feinbilder bestimmt werden. Denn aus ihnen kann die Skalierung und Lage des 3D-Modells im Raum und daraus und der Ort der Störung bestimmt werden.

Soll ein großes System kontrolliert werden, so kann das Überfliegen des Systems in einer geringen Höhe zum Erzeugen von ausreichend genauen Störungsabbildungen einen großen Zeitraum benötigen. Die Störung wird erst spät erkannt, wodurch dem Betreiber ein finanzieller Schaden entstehen kann. Zudem kann ein das gesamte System abrasternder Flugweg ineffizient sein, da lange geflogen werden muss, um eine Störung zu lokalisieren.

Dieser Nachteil kann vermieden werden, wenn der Träger das System zunächst in einer größeren Höhe überfliegt. Die größere Höhe ist in Relation zur geringeren Höhe zu sehen, in der der Träger fliegt, wenn die Geokoordinaten und die Abbildung der Störung aufgenommen werden. In der größeren Höhe sollte das gesamte System durch eine Kamera des Trägers in einem einzigen Bild abgebildet werden beziehungsweise abbildbar sein, wobei in analoger Weise die Abbildung eines vorbestimmten Teils des Systems, beispielsweise ein einzelner Berghang oder ein einzelner Distrikt einer großen PV-Anlage, ausreicht.

Erkennt der Beobachter eine oder mehrere voneinander räumlich getrennte Störungen, so kann er diese auf einer Anzeige, auf der das Übersichtsbild des Systems abgebildet wird, manuell markieren. Die Markierung erfolgt beispielsweise durch einen Mauszeiger oder eine Berührung des Bildschirms oder dergleichen. Vorteilhafterweise wird die Anzahl der markierten Störungen und insbesondere auch ihre räumliche Anordnung zueinander gespeichert. Nun kann das System in der geringeren Höhe überflogen und die Bildinformation an den Beobachter gesendet werden, der die zuvor erkannte Störung aus der nunmehr aktuellen Bildinformation erneut erkennt und das Signal auslöst. Der Träger kann gezielt zu einer aufgefundenen Störung geflogen werden, sodass diese schnell erreicht und lokalisiert werden kann.

Eine zügige und einfache Durchführung des Verfahrens kann erreicht werden, wenn die Position einer markierten Störung berechnet wird und der Träger selbständig diese berechnete Position anfliegt beziehungsweise jede der berechneten Positionen, wenn mehrere Störungen markiert wurden. Die aus der Markierung berechnete Position der Störung wird in der Regel zu ungenau sein, um sie als Geokoordinaten an den Server zu übersenden. Ein Hinfliegen zur Störung und eine genauere Lokalisierung ist daher sinnvoll.

Bei einer großen Anlage und mehreren erkannten Störungen kann es schwierig sein, eine zuvor markierte Störung zu finden und zielstrebig anzufliegen. Generell kann das Überfliegen des Systems zeitlich gestrafft werden, wenn der Träger das System zunächst in einer größeren Höhe überfliegt, aus der das gesamte System oder ein vorbestimmter Teil des Systems durch die Kamera des Trägers abgebildet wird, und der Bediener einen Umriss des Systems oder desjenigen Teils des Systems, der die erkannten Störungen enthält, markiert. Nicht von einer Störung des Systems betroffene Systembereiche können ausgelassen werden. Außerdem kann eine Flugroute über den zu überprüfenden Teil des Systems automatisiert erstellt werden.

Außerdem ist es vorteilhaft, wenn der Beobachter zwei oder mehr Positionen in der Abbildung des Systems markiert. Der Träger kann nun zu beiden Positionen fliegen und deren Geokoordinaten bestimmen. Mithilfe der Geokoordinaten kann ein Maßstab des Übersichtsbilds berechnet werden. Nun kann beispielsweise eine Flugroute über das System berechnet werden, sodass ein unnötiges Fliegen von Schleifen vermieden wird. Beispielsweise kann aus den Geokoordinaten der zumindest zwei Positionen die Geokoordinaten des Umrisses, eine Größe des Umrisses beziehungsweise des umrissenen Teilbereichs des Systems oder eine analoge Größe bestimmt und daraus die Flugroute berechnet werden.

Es kann vorkommen, dass der Bediener auch bei einem Hinfliegen zu einer vermeintlichen Störung diese fälschlicherweise als Störung klassifiziert, sodass beispielsweise eine unnötige Reparatur veranlasst wird. Um dies zu vermeiden, ist es vorteilhaft, wenn die Abbildung der Störung auf eine Störungseigenschaft untersucht wird und ein entsprechendes Untersuchungsergebnis klassifiziert wird. Beispielsweise kann erkannt werden, dass es sich bei der vermeintlichen Störung um eine minder relevante Störung oder sogar ein störungsfreies Gebiet handelt.

Generell kann die Ausdehnung der Störung als Störungseigenschaft bestimmt werden. Es wird die Abbildung der Störung auf die Ausdehnung der Störung in der Realität untersucht. Bei einer Photovoltaikanlage kann bestimmt werden, über wie viele PV-Module die Störung reicht. Nun kann die Störung in Abhängigkeit ihrer Ausdehnung klassifiziert werden. Umfasst die Störung beispielsweise mehrere PV-Module, so kann es sich im Wesentlichen nur um einen defekten Modulstring handeln, der insgesamt ausgefallen und hierdurch wärmer als umgehende Module ist. Sind beispielsweise eine Anzahl von Module durch irgendeinen Effekt, beispielsweise eine Lichtreflektion, wärmer als die umgebenden Module, so umfasst die wärmere Stelle in der Regel nicht exakt den örtlichen Bereich eines Strings. Dies würde bei der Überprüfung auffallen, beispielsweise weil die wärmeren Module in einer anderen Anzahl vorliegen, als die Strings dieser Anlage Module haben. Auch Sonnenreflexe, die der Bediener irrtümlich als Störung markiert hat, können auf diese Weise erkannt werden.

Als weitere Maßnahme ist es vorteilhaft, dem Bediener in Abhängigkeit des Ergebnisses der Klassifikation eine Mitteilung mit einer Fluganweisung zu machen. Der Beobachter kann beispielsweise den Ort der vermeintlichen Störung aus einer anderen Richtung mit der Kamera des Fluggeräts betrachten, um den Ort der vermeintlichen Störung noch einmal und genauer zu untersuchen.

Es kann vorkommen, dass keine Genehmigung zum Überflug über ein zu prüfendes System erhalten werden kann. In einem solchen Fall kann der Träger ein Fahrzeug mit einer Höhenhalterung sein, mit der die Kamera über dem Fahrzeug gehalten ist. Die Höhenhalterung ist beispielsweise eine Teleskopstange, an der die Kamera befestigt ist und so von oben auf das System gerichtet werden kann. Möglich ist auch ein Seil als Höhenhalterung, an der ein Ballon befestigt ist, der die Kamera trägt.

Die Erfindung ist jedoch nicht nur auf die Inspektion technischer Systeme anwendbar, sondern auch zur Auffindung eines Menschen sinnvoll einsetzbar. So kann beispielsweise mithilfe der Erfindung eine gesuchte Person, wie ein verunglückter Bergsteiger, oder ein Lawinenopfer, schnell lokalisiert und in einem unübersichtlichen Ökosystem, beispielsweise einem Lawinenfeld, schnell aufgefunden und geborgen werden. Auch im Bereich der Sicherheitstechnik ist die Erfindung vorteilhaft einsetzbar, beispielsweise zur Überwachung einer Menschenansammlung, bei der die Störung ein unerwünschtes Verhalten eines oder mehrerer Menschen sein kann, beispielsweise eine randalierende Gruppe in einer Demonstration. Die Störung ist hierbei eine Person in einem unerwünschten Zustand innerhalb eines Natursystems, wie einem Ökosystem, einer Bergwelt oder dergleichen. Entsprechend ist das Verfahren dann ein Verfahren zum Lokalisieren einer Person in der Natur, einer Stadt und/oder innerhalb einer Demonstration oder dergleichen.

Ebenfalls nützlich ist die Erfindung im Bereich der Forst- oder Landwirtschaft, beispielsweise, um Tiere aufzuspüren, wie ein Reh vor einem Mähdrescher, oder Wildschweine, die eine Ernte auf einem Feld beschädigen. Das Verfahren ist dann ein Verfahren zum Lokalisieren von Tieren in einer Landschaft.

Zusammenfassend ist das System in einer weiteren vorteilhaften Ausführungsform der Erfindung ein Personensicherheitssystem. Ein Personensicherheitssystem kann ein System sein, das für die Sicherheit von Personen sorgt oder deren Sicherheit erhöht. Ein Beispiel ist ein Überwachungssystem, beispielsweise an einem oder mehreren öffentlichen Plätzen, an die ein Beobachter angeschlossen ist, wie ein Sicherheitsdienst, der Störungen, beispielsweise Gewalthandlungen oder andere Straftaten erkennt und eingreift. Auch eine Bergrettung mit einem Rettungsfahrzeug, wie einem Hubschrauber, kann ein Personensicherheitssystem sein. Insofern kann das System ein Menschenrettungssystem sein.

Die Störung kann zumindest ein Mensch in Gefahr sein, zu den obigen Beispielen ein Mensch, der eine Straftat erleidet oder in einer Berglandschaft außer Stande gerät, aus eigener Kraft an einen sicheren Ort zu gelangen. Allgemein gesprochen kann die Störung zumindest ein Mensch in einem unerwünschten Zustand sein, wobei der unerwünschte Zustand ein Zustand des Menschen sein kann, den dieser Mensch nicht wünscht und den er wieder verlassen möchte. Der Mensch kann in einer Ansammlung von Menschen sein, wie in einer Stadt, einem öffentlichen Transportmittel oder einer Demonstration, oder einem Ökosystem, wie einer Bergwelt, einem Gewässer oder einem Wald.

Spezieller gesehen kann die Störung ein Mensch in Gefahr sein oder einen Menschen in eine Gefahr bringen. Die Gefahr kann durch andere Menschen ausgelöst sein, beispielweise durch eine Straftat oder Fahrlässigkeit, wie eine Randale in einer Demonstration oder einer Sportveranstaltung.

Der Träger kann ein Fahrzeug sein. Es ist aber auch möglich, dass der Träger ein Lebewesen ist, das die Kamera mit sich führt. Ein Beispiel hierfür ist ein Hund der Bergrettung, der durch ein Gelände streift, z.B. über ein Lawinenfeld, und die Kamera trägt, z.B. auf seinem Rücken über seinen Kopf gerichtet. Der Beobachter kann eine Person sein, die die Bildinformation von der Kamera anschaut und beispielsweise ein Anzeichen für eine Person als Störung in der Bildinformation findet. Mittels des Feinbilds oder der Feinbilder kann der Beobachter die Störung auswerten und anhand der Geokoordinaten des Trägers oder der Störung einen Rettungstrupp zielgerichtet zur Störung losschicken.

Anstelle eines Tieres kann der Träger natürlich auch ein Mensch sein, der die Kamera trägt. Ein Beispiel kann ein Polizist sein, der eine Menschenansammlung mit einer Bodycam filmt. Ein Beobachter kann eine Gefahr als Störung erkennen, das Signal auslösen, die Störung gegebenenfalls anhand des Feinbilds genauer untersuchen und mit den Geokoordinaten eine sicherheitsrelevante Maßnahme einleiten.

Die Erfindung betrifft außerdem eine Vorrichtung zum Lokalisieren einer Störung eines Systems, umfassend einen mobilen Träger mit einer Kamera und einen Sender zum Senden von aus Bildern der Kamera gewonnener Bildinformation an einen bodengebundenen Server.

Um eine kostengünstige Systeminspektion zu erreichen, umfasst die Vorrichtung erfindungsgemäß ein Signalgerät zum Auslösen eines Signals und zum Senden des Signals an den mobilen Träger umfasst, und ein Datenmodul des mobilen Trägers, das dazu vorbereitet ist, auslöst durch das Signal die Übermittlung der aktuellen Geokoordinaten des mobilen Trägers und einer von der Kamera aufgenommenen Abbildung der Störung zu steuern.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: Eine Photovoltaikanlage als ein System, das auf Störungen untersucht werden soll,
- FIG 2: ein unbemanntes Fluggerät mit einer Kamera zur Aufnahme des Systems von oben, einem Bediener, der das Fluggerät bedient, und einem Beobachter, der das System anhand der Flugbilder beobachtet,
- FIG 3: das Fluggerät und ein das Fluggerät steuerndes Steuergerät in einer schematischen Darstellung,
- FIG 4: einen Ausschnitt der Photovoltaikanlage in einer schematischen Draufsicht mit einer der Störungen,
- FIG 5: eine schematische Darstellung von Datenströmen zwischen einer Kamera des Fluggeräts und einem zusätzlichen Mobilgerät am Steuergerät,
- FIG 6: eine Draufsicht auf die Photovoltaikanlage mit fünf gekennzeichneten Störungen und
- FIG 7: ein Lawinenfeld in einem Ökosystem, in dem ein Mensch begraben ist.

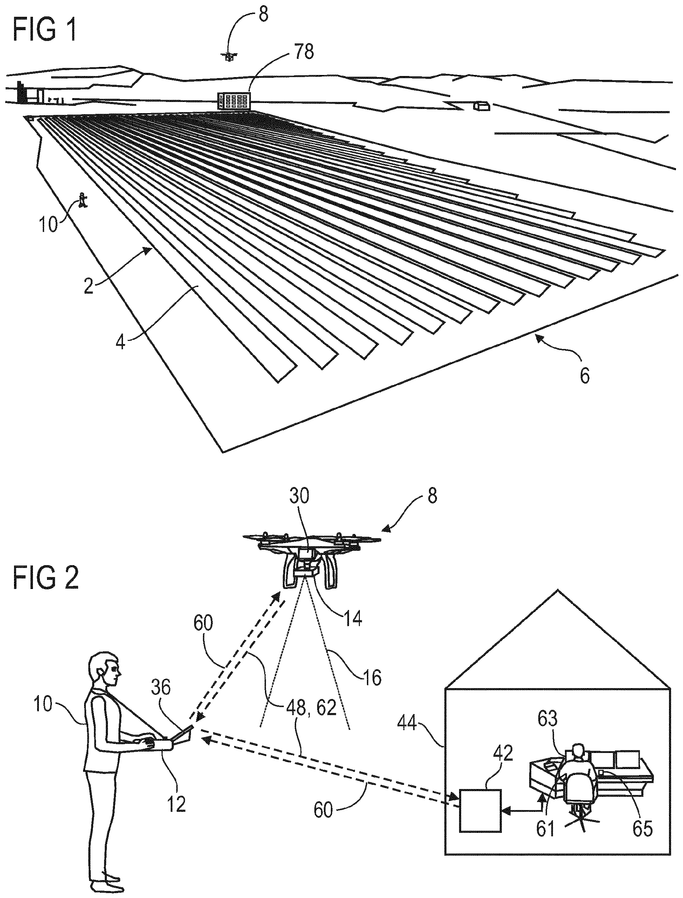

FIG 1 zeigt eine Photovoltaikanlage 2 mit einer Vielzahl von Photovoltaikmodulen 4, die auf nicht dargestellten Ständern auf dem Erdboden in langen Reihen angeordnet sind. Die Photovoltaikanlage 2 ist ein System 6 in Form einer technischen Anlage, das auf Störungen untersucht werden soll. In der Photovoltaikanlage 2 werden solche Störungen durch Ausfälle von Photovoltaikmodulen 4 oder Teilen davon gebildet.

Die Störungen sind in einzelne Schweregrade unterteilt, im einfachsten Fall leichte Störungen und schwere Störungen. Unter leichte Störungen fallen Ausfälle von Modulteilen, also einer einzelnen Zelle oder einem größeren Modulteil, der durch den Defekt einer Bypassdiode verursacht werden kann. Der Ausfall eines ganzen Moduls kann als leichter oder schwerer Defekt klassifiziert werden und wird im Folgenden der Einfachheit halber ebenfalls als leichter Defekt klassifiziert. Eine schwere Störung ist der Ausfall eines gesamten Strings, also einer Vielzahl von nebeneinanderliegenden Photovoltaikmodulen 4. Ein schwerer Defekt erzeugt einen solchen finanziellen Schaden für den Systembetreiber, dass er zügig entdeckt und behoben werden sollte.

Zum Erkennen und Lokalisieren einer technischen Störung des Systems 6 wird ein mobiler Träger 8 in Form eines unbemannten Fluggeräts von einem Bediener 10 gestartet und über das System 6 geflogen. Träger 8 und Fluggerät 8 werden in diesem Ausführungsbeispiel synonym verwendet und können begrifflich ausgetauscht werden. Eine Kamera 14 (FIG 2) des mobilen Trägers 8 nimmt Bilder vom System 6 auf, beispielsweise in Form eines Flugfilms, der durch die nach unten ausgerichtete Kamera 14 aufgenommen wird. Dieser Flugfilm wird direkt oder komprimiert an ein Steuergerät 12 des Bedieners 10 gesendet, sodass dieser eine Liveaufnahme der Sicht der Kamera 14 des Trägers 8 auf einem Bildschirm vor sich sieht. Anhand dieser Aufnahme kann der Bediener 10 den Träger 8 über das System 6 steuern.

Die von der Kamera 14 aufgenommen Bilder sind hochaufgelöste Bilder, deren komplette drahtlose Übertragung eine hohe Bandbreite erfordern würde. Um dies zu vermeiden, werden die Bilder von der Kamera 14 oder einer anderen Einheit des Trägers 8 jeweils in ihrer Datenmenge reduziert, sodass zunächst nur solche reduzierten Grobbilder drahtlos versendet werden.

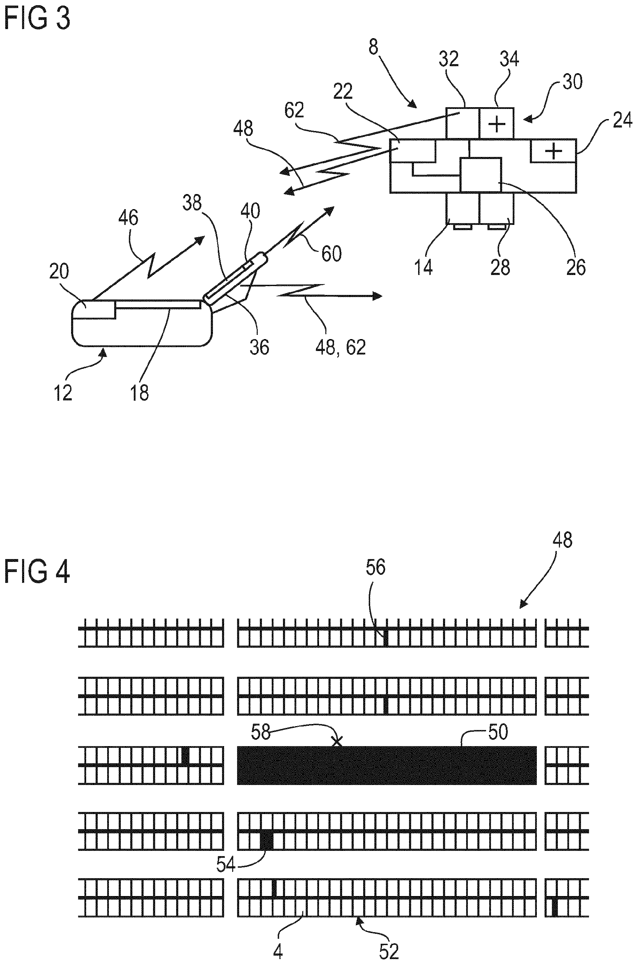

FIG 2 zeigt den Bediener 10 mit seinem Steuergerät 12, mit dem er den mobilen Träger 8 in Form des unbemannten Fluggeräts steuert. FIG 3 zeigt das Steuergerät 12 und den Träger 8 in einer schematischeren Darstellung. Der Träger 8 ist ein Multikopter, in diesem Ausführungsbeispiel ein Quadrokopter, der eine Kamera 14 mit einem senkrecht nach unten gerichteten Blickfeld 16 trägt. Die senkrechte Blickrichtung 16 der Kamera 14 bezieht sich auf die waagerechte Ausrichtung des Fluggeräts in der Luft oder am Boden.

Wie aus FIG 3 zu sehen ist, ist das Steuergerät 12 mit einem Anzeigefeld 18 versehen, auf dem der Flugfilm komprimiert, also aus den Grobbildern, als Bildinformation dem Bediener 10 angezeigt wird. Diese Bildinformation wird also aus den Bilddaten der Kamera 14 gewonnen, drahtlos an das Steuergerät 12 übertragen und dort angezeigt. Das Steuergerät 12 umfasst ferner eine Kommunikationseinheit 20 mit einem Sender, mit dem das Steuergerät 12 Steuerdaten zur Steuerung des Fluggeräts 8 drahtlos an dieses übermittelt. Die Kommunikationseinheit 20 enthält außerdem einen Empfänger zum Empfangen von Steuerdaten, Positionsdaten und die Bildinformation zum Anzeigen des Flugfilms auf dem Anzeigefeld 18.

Auch das Fluggerät 8 umfasst eine Kommunikationseinheit 22 mit einem Sender und einem Empfänger. In einer Möglichkeit ist die Kommunikationseinheit 22 fernkommunikationstauglich und kann über eine Mobilfunkverbindung mit dem Server 42 verbunden werden zur Datenübertragung zum und vom Server 42. In einer anderen Möglichkeit ist die Kommunikationseinheit 22 das Gegenstück zur Kommunikationseinheit 20 des Steuergeräts 12 und dient zum besagten Datenaustausch mit dieser, beispielsweise über WLAN. Über einen GPS-Empfänger 24 empfängt das Fluggerät 8 seine aktuellen Positionsdaten und sendet diese über die Kommunikationseinheiten 22 und 20 an das Steuergerät 12 beziehungsweise den Bediener 10. Der GPS-Empfänger 24 und die Kommunikationseinheit 22 bilden ein erstes Datenmodul, das mit dem Steuergerät 12 kommuniziert, und über das die vollständige Information des Fluggeräts 8, wie von dessen Hersteller zur Verfügung gestellt ist, erreicht werden kann. Dies geschieht auch unter Zuhilfenahme weiterer Einheiten, wie einem Speichermedium 26 und einer zweiten Kamera 28. Während die erste Kamera 14 im infraroten Bereich sensitiv ist und thermografische Bilder aufnimmt, ist die zweite Kamera 28 im visuellen Spektralbereich sensitiv und nimmt Bilder beziehungsweise Filme im visuellen Spektralbereich auf. Solche Filme können dem Bediener 10 beim Lenken des Fluggeräts 8 helfen. Der Bediener 10 kann auf dem Steuergerät 12 wählen, ob der angezeigte Film ein Infrarotfilm oder visueller Film ist.

Das Fluggerät 8 umfasst jedoch auch ein zweites Datenmodul 30 mit einer weiteren Kommunikationseinheit 32 umfassend einen Sender 32 und einen Empfänger und einen weiteren GPS-Empfänger 34. Dieses zweite Datenmodul 30 stellt zusätzlich zu den vollständigen vom Empfänger bereitgestellten Funktionen weitere Funktionen des Fluggeräts 8 zur Verfügung. Das zweite Datenmodul 30 kommuniziert mit einem Mobilgerät 36 des Bedieners 10. Dieses ist im gezeigten Ausführungsbeispiel ein Smartphone, das mit einem Halter am Steuergerät 12 befestigt ist. Das Mobilgerät 36 ist in der Lage, eine Nahbereichskommunikation mit dem Fluggerät 8 über ein Nahbereichsprotokoll, beispielsweise WLAN, aufzubauen und eine Fernkommunikation über ein Fernkommunikationsprotokoll, beispielsweise UMTS mit einem Server 42 in einem vom Bediener 10 entfernt angeordneten Gebäude 44 herzustellen. Außerdem enthält das Mobilgerät 36 ein Anzeigefeld 38 und einen Auslöser 40 zum Erzeugen eines Signals 60, das vom Fluggerät 8 empfangen wird.

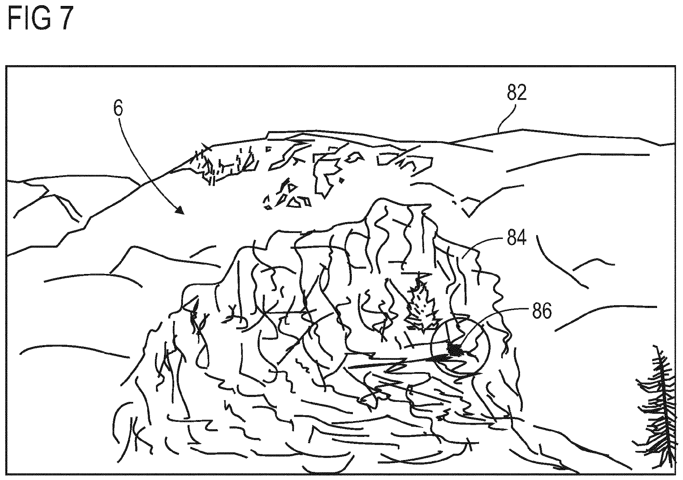

Während des Flugs des Fluggeräts 8 über das System 6 sendet das Steuergerät 12 Steuerdaten 46 an das Fluggerät 8 zu dessen Steuerung. Die Kommunikationseinheit 22 sendet Bildinformation 48 zum Steuergerät 12 zum Anzeigen für den Bediener 10. Diese Bildinformation 48 wird zudem über das Mobilgerät 36 zum Server 42 im Gebäude 44 gesendet. Die Bildinformation 48 wird vom Server 42 entweder als solche oder modifiziert an einen Beobachter 61 über eine Anzeige 63 angezeigt. Das Gebäude 44 wird üblicherweise weit weg vom Bediener 10 sein, meist deutlich weiter weg als 1 km. Der Beobachter 61 ist ein Fachmann für das zu überwachende System 6 und dessen Störungen 50, 54, 56 (FIG 4) und 86 (FIG 7), wohingegen der Bediener 10 diese Qualifikation üblicherweise nicht aufweist und als Pilot des Trägers 8 ausgebildet sein kann.

Der Beobachter 61 überwacht die Bildinformation, die als Film auf der Anzeige 63 vor ihm abläuft, auf Störungen 50, 54, 56, 86. Wenn er anhand der Bildinformation 48 eine Störung 50 erkennt, löst er ein Signal 60 aus. Hierzu hat er Zugriff auf ein Signalgerät 65, das das Signal 60 auslöst, sodass dieses zum mobilen Träger 8 gesendet wird. Optional markiert er die Störung auf der Anzeige 63, wie im Folgenden anhand der Darstellung aus FIG 4 beschrieben wird.

FIG 4 zeigt die Bildinformation 48 in Form eines Bilds, das einen Ausschnitt des Systems 6 zeigt, und das auf der Anzeige 63 angezeigt ist. In diesem Ausführungsbeispiel umfasst die Bildinformation 48 eine thermografische Darstellung einer Vielzahl von Photovoltaikmodulen 4, die zu einzelnen Strings 52 zusammengefasst sind. Eine Störung 50, also in diesem Fall ein Defekt eines Moduls 4 oder eines Strings 52, ist dadurch erkennbar, dass die betroffenen Module 4 wärmer sind, als die intakten Module 4. Dies ist in der thermografischen Abbildung sichtbar und ist in FIG 4 durch schwarze Flächen angedeutet. Zu sehen ist, dass die Störung 50 ein ausgefallener String 52 ist. Es sind noch weitere Störungen 54, 56 zu sehen, die jedoch erst später beschrieben werden.

Während des Überflugs über das System 6 erkennt der Beobachter 61 eine Störung 50 in Form eines ausgefallenen Strings 52. Nun erzeugt der Beobachter 61 ein Signal 60, durch das mehrere Aktionen ausgelöst werden. Hierfür umfasst sein Eingabesystem einen Auslöser, beispielsweise in Form einer sensitiven Fläche auf dem Touchscreen. Das Signal 60 wird an den Server 42 und von dort an das Mobilgerät 36 geführt. Das Mobilgerät 36 enthält eine Applikation, die vor oder während des Flugs des Fluggeräts 8 über das System 6 eine Nahbereichsverbindung, im Folgenden vereinfacht als WLAN-Verbindung bezeichnet, mit dem zweiten Datenmodul 30 herstellt. Das Signal 60 wird nun über diese Verbindung zum zweiten Datenmodul 30 beziehungsweise dessen Kommunikationseinheit 32 übersendet. Das zweite Datenmodul 30 liest daraufhin die Geokoordinaten des Fluggeräts 8 aus dem GPS-Empfänger 34 aus und extrahiert zudem ein Feinbild der Störung 50 aus den von dem Fluggerät 8 aufgenommenen Daten.

Je nach Güte der Datenverbindung kann es sein, dass das Fluggerät 8 bereits von der Störung 50 weggeflogen ist, bis das Signal 60 bei ihm eintrifft. Das Feinbild der Störung wird daher wie folgt extrahiert. Jedes Grobbild oder jede Bildsequenz der Grobbilder wird mit einem eindeutigen Identifier gekennzeichnet. Löst der Beobachter 61 ein Signal 60 aus, so wird derjenige Identifier zum Mobilgerät 36 gesendet, der zum Zeitpunkt der Signalauslösung auf der Anzeige 63 angezeigt wurde. Hat der Beobachter 61 eine Markierung vorgenommen, so wird der Identifier dieses markierten Grobbilds verwendet. Der Beobachter kann zudem den ihm gezeigten komprimierte Film stoppen und nun im Film Bilder vor- oder zurückspulen, bis er ein gutes Bild zum Markieren findet. Das Markieren legt den Identifier fest, wobei ein oder mehrere Grobbilder oder Filmsequenzen markiert werden können, z.B. ein Anfang und ein Ende einer Filmsequenz.

Anhand dieses oder dieser Identifier wird im Träger 8 das oder die Feinbilder extrahiert. Zudem werden zu jedem Bild diejenigen Geokoordinaten aus einem Speicher 26 ausgelesen, an denen sich der Träger 8 zum Zeitpunkt der Aufnahme dieses Bilds befand. Feinbild und Geokoordinaten, im Folgenden vereinfacht als Koordinatendaten 62 bezeichnet, werden nun an das Mobilgerät 36 gesendet. Dieses leitet die Koordinatendaten 62 in identischer oder veränderter Form über die Fernverbindung zum Server 42 weiter. Von dort kann sie der Beobachter 61 abrufen, um beispielsweise weitere Analysen der Störung vorzunehmen.

Wie beschrieben, markiert der Beobachter 61 den Bildbereich, der die Störung 50 darstellt, beispielsweise mithilfe eines Eingabeinstruments, wie eine Maus oder ein Touchscreen. Diese Markierung wird auf eine Eingabe des Beobachters 61 dem Mobilgerät 36 übermittelt, das sie auf seinem Anzeigefeld 38 anzeigt. Optional sind Beobachter 61 und Bediener 10 fernmündlich miteinander verbunden und können sich per Sprache austauschen. Der Bediener 10 weiß nun, dass eine Störung 50 gefunden wurde.

Der Bediener 10 kann nun auf Anweisung des Beobachters 61 oder selbständig das Fluggerät 8 anhand der Bildinformation 48 und/oder Markierung über die Störung 50 lenken, um diese möglichst genau zu lokalisieren. Er erreicht beispielsweise die in FIG 4 markierte Position 58. Die Position 58 befindet sich selbstverständlich oberhalb der Störung 50, ist jedoch bei einer nur zweidimensionalen Betrachtung direkt an der Störung 50 gelegen. Der Bediener 10 steuert das Fluggerät 8 zur Position 58, indem er so fliegt, dass die Störung 50 zumindest im Wesentlichen in der Mitte des Bildfelds der aufnehmenden Kamera 14 beziehungsweise der Bildinformation 48 liegt, wie in FIG 4 dargestellt ist. Bedingt durch etwas Seitenwind gelingt dem Bediener 10 das nicht ganz, wie in FIG 4 dargestellt ist, jedoch in ausreichendem Maße. Neue Bilder der Störung 50 werden aufgenommen mit besser Aufnahmequalität und neuen Koordinatendaten, sodass die Störung 50 besser analysiert und lokalisiert werden kann.

Der Server 42 ist Teil eines Managementsystems des Betreibers des Systems 6. Anhand der Koordinatendaten 62 erstellt der Server 42 eine Reparaturanweisung und sendet diese an einen Störungsdienst. Anhand der Abbildung der Störung 50 kann der Störungsdienst Art und Umfang der Störung erkennen. Aus den Positionsdaten der Störung 50 kann der Störungsdienst die Störung 50 ausreichend genau lokalisieren, sodass er weiß, wo der ausgefallene String 52 liegt. Da die Zeitspanne zwischen dem Erzeugen des Signals 60 und dem Erzeugen des Reparaturauftrags nur wenige Sekunden oder maximal Minuten beträgt, kann die Störung 50 sehr schnell behoben werden.

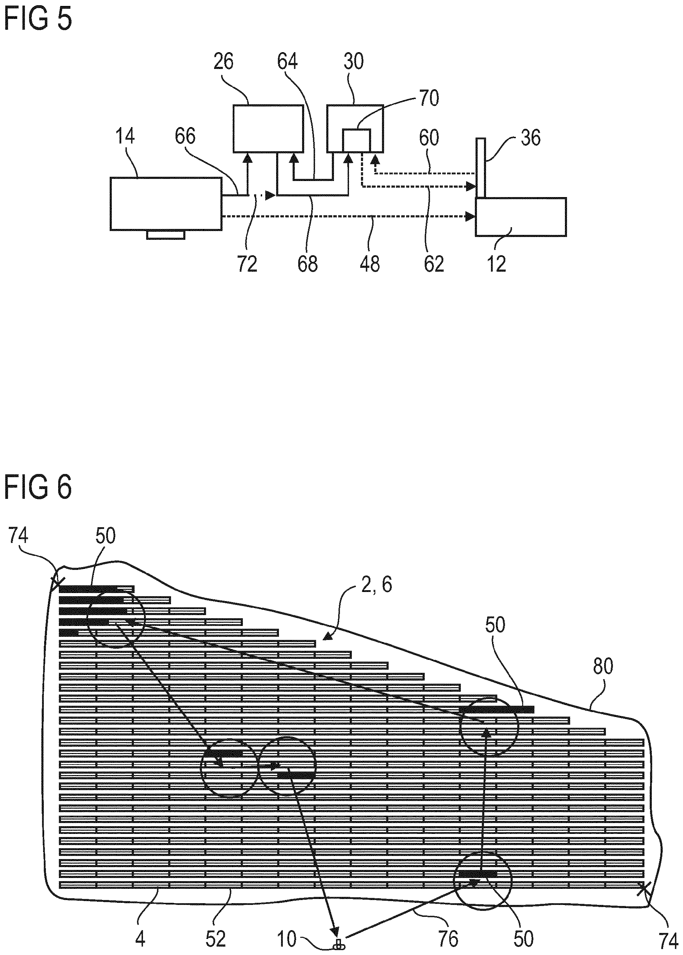

FIG 5 zeigt Möglichkeiten, wie ein Feinbild der Störung 50 aus den von dem Fluggerät 8 erzeugten Daten extrahiert werden kann. Schematisch dargestellt sind die Kamera 14, das Steuergerät 12 mit dem daran angebrachten Mobilgerät 36, das Speichermedium 26 des Fluggeräts 8 und das zweite Datenmodul 30 am Fluggerät 8. Gestrichelte Verbindungen sind Drahtlosverbindungen und durchgezogene Verbindungen sind verdrahtete Verbindungen. Eine gepunktete Verbindung ist eine Alternativlösung. Gezeigt ist die Übersendung der Bildinformation 48 vom Fluggerät 8 an das Steuergerät 12. Zudem ist dargestellt das Signal 60 und die Koordinatendaten 62, die vom zweiten Datenmodul 30 an das Mobilgerät 36 übermittelt werden.

Getriggert durch das Signal 60 greift das zweite Datenmodul 30 in einem Schritt 64 auf das Speichermedium 26 zu. In diesem sind die von der Kamera 14 aufgenommenen Bilddaten abgespeichert, wie durch den Schritt 66 dargestellt ist. Das zweite Datenmodul 30 liest nun in Schritt 68 ein oder mehrere der abgespeicherten Bilder ab, beispielsweise das zuletzt von der Kamera 14 vollständig abgespeicherte Bild oder das von einem Identifier vorgegebene Bild. Dieses Feinbild umfasst die Abbildung der Störung 50 und wird in einem Zwischenspeicher 70 des Datenmoduls 30 zwischengespeichert. Zusammen mit den ausgelesenen Geokoordinaten wird dieses Feinbild nun als Teil der Koordinatendaten 62 an das Mobilgerät 36 gesendet.

Alternativ besteht die Möglichkeit, dass das zweite Datenmodul 30 in der Weise auf die Kameraschnittstelle zugreift, dass sämtliche von der Kamera im Speichermedium 26 abgelegten Daten auch im Zwischenspeicher 70 zwischengespeichert werden, wie durch den gepunkteten Pfeil des Zwischenspeicherschritts 72 in FIG 5 angedeutet ist. Dieser Zwischenspeicher 70 wird regelmäßig überschrieben, beispielsweise alle zehn Sekunden oder jede Minute. Getriggert durch das Signal 60 wird nun eines oder mehrere der im Zwischenspeicher 70 vorhandenen Feinbilder als Teil der Koordinatendaten 62 an das Mobilgerät 36 versandt.

Beim obigen Verfahren fliegt das Fluggerät 8 möglichst über der Störung 50, um diese ausreichend genau zu lokalisieren. Eine einfachere und genauere Methode ist im Folgenden beschrieben. Aus den Feinbildern wird durch den Server 42 oder ein anderes Bildverarbeitungssystem per Fotogrammetrie ein 3D-Modell des in den Feinbildern abgebildeten Systems 6 oder eines Teils davon erstellt. Da zu jedem Feinbild deren Aufnahmekoordinaten vorliegen, können diese Koordinaten in Bezug zum 3D-Modell gesetzt werden. Hieraus können die Skalierung des Modells und auch dessen Lage im Koordinatenraum bestimmt werden. Hieraus wiederum und der Lage der Störung 50 im Modell kann die Position der Störung 50 im Koordinatenraum bestimmt werden. Ein erneutes Anfliegen der Störung 50 ist insofern nur für eine genauere Positionsbestimmung nicht mehr notwendig. Außerdem kann die Störung 50 auch dann in ihrer Position bestimmt werden, wenn sie schräg unter dem Fluggerät 8 liegt, sodass die Koordinaten des Fluggeräts 8 und der Störung erheblich voneinander abweichen.

Um die Störung 50 besonders genau analysieren zu können, zum Beispiel auf Art und/oder Schwere der Störung, kann es vorteilhaft sein, wenn das Fluggerät 8 nur in einer geringen Höhe über das System 6 fliegt. In einer solchen Höhe kann es schwierig sein, alle Störungen 50 des Systems 6 zu erkennen. Insofern ist es vorteilhaft, eine Vorerkennung durchzuführen, die im Folgenden anhand der Darstellung aus FIG 6 beschrieben ist.

FIG 6 zeigt eine schematische Draufsicht auf die Photovoltaikanlage 2 beziehungsweise das zu kontrollierende System 6. Gezeigt sind viele Reihen von Photovoltaikmodulen 4, die jeweils aus einer Anzahl von Strings 52 zusammengesetzt sind. Das System 6 wird nun vom Fluggerät 8 so hoch überflogen, dass das gesamte System 6 oder ein vorbestimmt definierter Teilbereich davon in einem Bild vollständig aufgenommen wird, das als Bildinformation 48 dem Beobachter 61 angezeigt wird. Der Beobachter 61 kann nun aus dieser thermografischen Abbildung die schweren Störungen 50 erkennen. Die leichten Störungen hingegen sind so klein, dass sie in diesem Übersichtsbild nicht erkennbar sind.

Das Übersichtsbild wird dem Beobachter 61 auf der Anzeige 63 angezeigt. Ebenfalls möglich ist es, dass das Übersichtsbild zusätzlich dem Bediener 10 auf seinem Anzeigefeld 18 des Steuergeräts 12 angezeigt wird. In dem Ausführungsbeispiel aus FIG 6 ist dargestellt, dass der Beobachter 61 auf dem Übersichtsbild fünf Störungen 50 erkennt. Da das Übersichtsbild auf der Anzeige 63 angezeigt wird, kann er Stellen darin markieren, indem er die Anzeige 63 beispielsweise dort berührt. Er markiert jede einzelne der Störungen 50 in ihrer Position. Die Stelle wird registriert und dem Überblickbild zugeordnet.

Die Markierungen sind in FIG 6 beispielhaft durch fünf Kreise dargestellt. Zweckmäßigerweise ist dem Mobilgerät 36 beziehungsweise in diesem Ausführungsbeispiel seiner Applikation bekannt, wie viele Störungen 50 näher untersucht werden müssen. Außerdem wird die relative Lage der Störungen 50 zueinander bestimmt, um diese dann mit den später mit den genaueren Positionen 58 beziehungsweise Geokoordinaten vergleichen zu können. Auf diese Weise kann erkannt werden, wenn der Bediener 10 in seiner Flugsteuerung den Anflug einer der markierten Störungen 50 vergisst und es kann eine Fehlermeldung ausgegeben werden.

Der Bediener 10 kann nun das Fluggerät 8 von Störung 50 zu Störung 50 fliegen, in der Position 58 darüber positionieren und hierdurch die Störungen 50 nacheinander lokalisieren. Jede auf diese Weise genauer lokalisierte Störung 50 wird durch ein Signal 60 des Beobachters 61 quittiert, durch das die Koordinatendaten 62 der Störungen 50 an den Server 42 übertragen werden. Das Signal 60 wird auch dem Bediener 10 angezeigt, sodass er das Fluggerät 8 nun zur nächsten Störung lenken kann.

Um den Bediener 10 die Steuerung des Fluggeräts 8 zu den Störungen 50 zu erleichtern, was insbesondere bei einer Vielzahl von vorliegenden Störungen 50 oder einer sehr großen Anlage vorteilhaft ist, kann der Flugweg 76 des Fluggeräts 8 zu den einzelnen Störungen 50 automatisiert bestimmt werden. Das Fluggerät 8 fliegt nun selbständig von Markierung zu Markierung und damit von Störung 50 zu Störung 50. Zur Bestimmung des Flugwegs 76 kann der Beobachter 61 beispielsweise zwei oder mehr Positionen 74 in der Übersichtsabbildung markieren. Die Geokoordinaten dieser Positionen 74 sind beispielsweise bekannt, sodass das Mobilgerät 36 nun die absolute Lage der einzelnen Störungsmarkierungen berechnen kann.

Eine weitere Möglichkeit besteht darin, dass das Fluggerät 8 zunächst zu den markierten Positionen 74 geflogen wird, sodass die Geokoordinaten dieser Positionen 74, getriggert durch ein vom Beobachter 61 erzeugtes Signal 60 am Mobilgerät 36, bestimmt werden können.

Hat der Bediener 10 beziehungsweise das Fluggerät 8 alle markierten Störungen 50 angeflogen, so ist die Überwachungsaufgabe beendet. Die Abarbeitung kann beispielsweise als eine Liste auf der Anzeige 63 und/oder dem Mobilgerät 36 angezeigt werden, auf der die einzelnen Störungen 50 aufgelistet sind. Wird der Anflug einer Störung 50 vergessen, so wird ein Fehlersignal ausgegeben.

Bei dem Beispiel aus FIG 6 ist dargestellt, dass eine der Störungen 50 in der oberen linken Ecke der Anlage nicht nur einen einzelnen ausgefallenen String 52 betrifft. Beim Anflug auf diese Störung 50 erkennt der Beobachter 61 durch die Nahaufnahme beziehungsweise die Abbildung der Störung 50, dass es sich hierbei um keine Störung 50 handelt, sondern um einen anderen Effekt, beispielsweise die Sonnenlichtreflektion durch ein Gebäude 78 auf die Anlage, wodurch die entsprechenden Module 4 wärmer sind als die Module 4 in der Umgebung. Die vermeintliche Störung 50 stellt sich als intaktes System heraus, sodass keine Koordinatendaten 62 erzeugt werden müssen. Dennoch sollte diese vermeintliche Störung 50 quittiert werden, um anzuzeigen, dass sie als markierte Stelle angeflogen wurde. Hierfür erzeugt der Beobachter 61 beispielsweise ein anderes Signal, durch das keine Daten an den Server 42 verschickt werden.

Bei der Darstellung aus FIG 4 ist zu sehen, dass es neben der schweren Störung 50 auch die leichteren Störungen 54, 56 gibt. Eventuell sind auch solche Störungen 54, 56 von Interesse, sodass sie lokalisiert werden sollen. Da diese in einer größeren Anzahl vorliegen als die schweren Störungen 50 und zudem im Übersichtsbild nicht zu sehen sind, muss die gesamte Anlage systematisch überflogen werden, um diese Störungen 54, 56 zu erkennen. Wird dieses systematische Überfliegen von dem Bediener 10 manuell durchgeführt, so ist es gerade bei sehr großen Anlagen fehleranfällig, da eventuell nicht alle Bereiche der Anlage überflogen werden.

Um dies zu vermeiden, wird der Flugweg 76 des Fluggeräts 8 berechnet und das Fluggerät 8 wird selbständig auf diesem Flugweg 76 systematisch über das gesamte System geführt. Hierfür muss jedoch die Ausdehnung des zu überwachenden Systems 6 bekannt sein. Ist dies nicht der Fall, so kann der Bediener 10 auf dem Übersichtsbild eine Umriss 80 der zu kontrollierenden Fläche eingeben, beispielsweise indem er mit seinem Finger auf dem Anzeigefeld 38 entlangfährt und hierdurch den Umriss 80 erzeugt. Anhand der im Vorhinein oder durch Anflug absolut bekannten Positionen 74 kann anhand des Umrisses 80 nun die zu kontrollierende Fläche bestimmt werden.

Der Flugweg 76 ist auch abhängig von der Flughöhe des Fluggeräts 8 über dem System 6. Eine geeignete Flughöhe kann im Vorhinein bestimmt sein, vom Bediener 10 vorgegeben werden oder anhand von optischen Daten berechnet werden. Bei Sonnenlicht und einem hohen Kontrast kann das Fluggerät 8 beispielsweise das System 6 höher überfliegen als bei schlechterer Sicht. Beispielsweise wird ein Übersichtsbild vom Mobilgerät 36 auf seinen Kontrast ausgewertet und hierdurch eine geeignete Flughöhe bestimmt. Der Flugweg 76 kann nun automatisiert festgelegt werden und das Fluggerät 8 rastert das gesamte System 6 systematisch ab. Die Flughöhe kann mit einem Höhensensor des Fluggeräts überprüft und insbesondere geregelt werden. In diesem Beispiel wird die Flughöhe mit einem barometrischen Höhensensor des Fluggeräts selbständig vom Fluggerät geregelt.

Der Beobachter 61 kann anhand der permanent übersandten Bildinformation 48 schwere Störungen 50 wie oben beschrieben markieren, sodass sie sehr schnell an den Server 42 übermittelt werden. Die leichten Störungen 54, 56 können in einem späteren Verfahren mittels Bildverarbeitung automatisiert erkannt und lokalisiert werden, sodass sie später ebenfalls behoben werden können.

In Abwandlung zu dem bisher beschriebenen Ausführungsbeispiel kann der Beobachter 61 ein autonomes digitales System sein, dass die Störungen 50, 54, 56, 86 selbständig erkennt und das Signal 60 auslöst. Ein menschlicher Überwacher 61 kann zusätzlich vorhanden sein, der das System anhand der Anzeige 63 überwacht. Das obige Ausführungsbeispiel bleibt jedoch auch hierbei in seinen Details ausführbar wie beschrieben.

Weiter ist es möglich, dass der Bediener 10 ein digitales System zur Flugsteuerung ist, das den Träger 8 autonom fliegt, wie oben zum menschlichen Bediener beschrieben ist. Die Flugroute kann vom Beobachter 61 oder von einem menschlichen Kontrolleur 10 vorgenommen werden, der das Flugsystem überwacht. Ein manuelles Steuergerät 12 ist in einem solchen Fall nicht notwendig und auch ein Mobilgerät 36 wird dann meist nicht vorhanden sein, weil kein menschlicher Bediener 10 vor Ort sein muss. Die Datenübertragung vom Träger 8 zum Server 42 und vom Server 42 zum Träger 8 kann dann direkt erfolgen, beispielsweise indem der Träger 8 ein fernkommunikationstaugliches Kommunikationsmodul aufweist, wie ein LTE-Modul. Selbstverständlich ist es auch bei einem menschlichen Bediener mit Mobilgerät 36 möglich, dass der Träger 8 ein fernkommunikationstaugliches Kommunikationsmodul aufweist und die Kommunikation vom und zum Server 42 direkt erfolgt.

Die Erfindung ist nicht nur auf die Überwachung von Photovoltaikanlagen 2 beschränkt, sondern geeignet, eine Vielzahl von unterschiedlichsten Systemen zu überwachen. Bauwerke oder Anlagen sind bevorzugte Überwachungssysteme. Aber auch urbane Räume oder Ökosystem eigenen sich als erfindungsgemäßes System, dessen Überwachung gemäß der Erfindung vorteilhaft durchgeführt werden kann. Ein weiteres Beispiel wird anhand der Darstellung aus FIG 7 erläutert.

FIG 7 zeigt eine Landschaft 82, in der ein Lawinenfeld 84 zu sehen ist. Die Landschaft 82 beziehungsweise das Lawinenfeld 84 können als System 6 betrachtet werden, beispielsweise als Ökosystem oder als zu untersuchendes System allgemein. In dem Lawinenfeld 84 wird ein verschütteter Skifahrer vermutet, der gesucht werden soll. Wie im Vorhergehenden beschrieben ist, kann dies anhand des Fluggeräts 8 erfolgen. Es wird beispielsweise ein Übersichtsbild erstellt und dargestellt, das ähnlich wie die Darstellung aus FIG 7 aussehen kann. Der Beobachter 61 sucht nach Störungen 86 im System, die anhand der thermografischen Darstellung optisch identifiziert werden.

Bei dem Beispiel aus FIG 7 findet er beispielsweise eine Störung 86, die sich durch eine leichte Temperaturerhöhung gegenüber der Umgebung abhebt. Vermutlich findet er eine Vielzahl von solchen thermischen Auffälligkeiten, die er - wie im Vorhergehenden beschrieben - markiert und abfliegt. Manche der vermeintlichen Störungen 86 kann er aufgrund deren Größe als Fehlalarm erkennen, beispielsweise wie eine Störung aus FIG 6. Hat er jedoch eine thermische Auffälligkeit entdeckt, die bei näherer Betrachtung als mögliche tatsächliche Störung 86 infrage kommt, so löst er das Signal 60 aus, wodurch die Koordinatendaten 62 erzeugt und an einen Server 42 gesendet werden, beispielsweise einen Leitrechner einer Rettungsstation. Ein Hubschrauber kann aufsteigen und einen Suchtrupp sehr gezielt zur lokalisierten Störung 86 bringen.

Sollten aus der Ferne keine ausreichenden Störungen 86 zu erkennen sein, so kann das Fluggerät 8 das gesamte System 6, das beispielsweise durch den Umriss 80 vom Beobachter 61 festgelegt wurde, systematisch abrastern, wie zu FIG 6 beschrieben ist. Der Beobachter 61 überwacht während dieses Vorgangs die übersandte Bildinformation 48 auf optische Auffälligkeiten, also in diesem Beispiel thermische Auffälligkeiten, und markiert eine jede durch das Ausgeben des Signals 60.

Insbesondere bei einer Lawine kann das Infrarotsignal eines Verschütteten gegenüber Sonnenreflexen zu gering sein, um einen Verschütteten zu finden. Hier können altbewährte Methoden durch die Erfindung eine sinnvolle Unterstützung finden. Beispielsweise wird ein Rettungshund zum Aufspüren des Verschütteten losgeschickt. Eine Kamera an einem Träger zeichnet den Weg des Tieres auf. Bleibt das Tier länger stehen und schnuppert oder gibt sogar Laut - dies kann an Bewegungen der Kamera oder durch ein zusätzliches Mikrofon erkannt werden, so erkennt der Beobachter 61 die potenzielle Störung 86 am Verhalten des Tieres. Das Signal 60 löst nun insbesondere die Koordinatenübermittlung an den Server 42 aus, sodass ein Rettungshubschrauber sofort gezielt auf den Weg geschickt werden kann, ohne dass man darauf warten muss, dass der Hund von Bergrettern erreicht wurde und diese ihre Position in aufwändigen Beschreibungen an die Leitstelle durchgegeben haben.

Alternativ zum Lawinenfeld 84 kann ein verletzter Bergsteiger in einem Gebirge gesucht werden oder eine Person in Seenot im Meer. Auch eine Untersuchung von Gebäude- oder Brückenelementen, technischer Anlagen, z.B. eines Rohrsystems einer Raffinerie, oder von Fahrzeugen, z.B. einem Passagierflugzeug, ist möglich. Während bei Untersuchungen zur Erkennung von Störungen mit senkrechter Ausrichtung beziehungsweise Gesichtsfeldrichtung auf einen Höhensensor verzichtet werden kann, da es im Wesentlichen auf die Horizontalkoordinaten ankommen, ist bei Ausrichtungen außerhalb der Horizontalen zweckmäßigerweise ein Höhensensor vorhanden, insbesondere im Modul 30. Die Höhendaten des Sensors sind dann zweckmäßigerweise Bestandteil der Koordinatendaten.

### Bezugszeichenliste

- 2: Photovoltaikanlage
- 4: Photovoltaikmodul
- 6: System
- 8: Fluggerät
- 10: Bediener
- 12: Steuergerät
- 14: Kamera
- 16: Blickfeld
- 18: Anzeigefeld
- 20: Kommunikationseinheit
- 22: Kommunikationseinheit
- 24: GPS-Empfänger
- 26: Speichermedium
- 28: Kamera
- 30: Datenmodul
- 32: Kommunikationseinheit
- 34: GPS-Empfänger
- 36: Mobilgerät
- 38: Anzeigefeld
- 40: Auslöser
- 42: Server
- 44: Gebäude
- 46: Steuerdaten
- 48: Bildinformation
- 50: Störung
- 52: String
- 54: Störung
- 56: Störung
- 58: Position
- 60: Signal
- 61: Beobachter
- 62: Koordinatendaten
- 63: Anzeige
- 64: Zugreifen
- 65: Signalgerät
- 66: Speichern
- 68: Auslesen
- 70: Zwischenspeicher
- 72: Zwischenspeicherung
- 74: Position
- 76: Flugweg
- 78: Gebäude
- 80: Umriss
- 82: Landschaft
- 84: Lawinenfeld
- 86: Störung

## Patentansprüche

1. Verfahren zum Lokalisieren einer Störung (50, 54, 56, 86) eines Systems (6), bei dem ein mobiler Träger (8) mit einer Kamera (14, 28) hochaufgelöste Bilder vom System (6) aufnimmt, die hochaufgelösten Bilder im mobilen Träger (8) gespeichert werden und aus den hochaufgelösten Bildern durch Komprimieren zu Grobbildern gewonnene Bildinformation (48) drahtlos an einen bodengebundenen Server (42) übertragen wird,
**dadurch gekennzeichnet,**
**dass** anhand der zum Server (42) gesandten Bildinformation die Störung (50, 54, 56, 86) erkannt wird, durch das Erkennen ein Signal (60) ausgelöst und zum mobilen Träger (8) gesendet wird, und dort triggert, dass ein im mobilen Träger (8) gespeichertes hochaufgelöstes Bild der Störung (50, 54, 56, 86) und Geokoordinaten des mobilen Trägers (8) zum Server (42) gesendet werden.

2. Verfahren nach Anspruch 1,
**dadurch gekennzeichnet,**
**dass** das System (6) eine technische Anlage und die Störung (50, 54, 56) ein Defekt eines Elements der Anlage ist.

3. Verfahren nach Anspruch 1 oder 2,
**dadurch gekennzeichnet,**
**dass** der Träger (8) von einem Bediener (10) mit Sichtkontakt zum Träger (8) gesteuert und die Störung (50, 54, 56, 86) von einem Beobachter (61) ohne Sichtkontakt zum Träger (8) anhand der zum Server (42) gesendeten Bildinformation erkannt wird.

4. Verfahren nach einem der vorhergehenden Ansprüche,
**dadurch gekennzeichnet,**
**dass** der mobile Träger (8) ein unbemanntes Fluggerät ist, das das System (6) an- oder überfliegt und von einem Bediener (10) vom Boden aus gesteuert wird, und die Störung (50, 54, 56, 86) in einem mehr als einem Kilometer vom mobilen Träger (8) entfernten Gebäude (44) gefunden und dort das Signal (60) ausgelöst wird.

5. Verfahren nach einem der vorhergehenden Ansprüche,
**dadurch gekennzeichnet,**
**dass** der mobile Träger (8) ein unbemanntes Fluggerät ist, das das System (6) autonom anhand einer vorbestimmten Flugroute an- oder überfliegt, und die Störung (50, 54, 56, 86) von einem mehr als einem Kilometer vom Bediener (10) entfernten Beobachter (61) gefunden wird, der das Signal (60) auslöst.

6. Verfahren nach einem der vorhergehenden Ansprüche,
**dadurch gekennzeichnet,**
**dass** der mobile Träger (8) über ein erstes Datenmodul mit einem GPS-Empfänger (24) und einem Sender (22) in seinem Flug gesteuert wird und die Bildinformation (48) sendet und über ein davon unabhängiges zweites Datenmodul (30) mit einem GPS-Empfänger (34) und einem Sender (32) die Geokoordinaten und die Abbildung der Störung (50, 54, 56, 86) übermittelt.

7. Verfahren nach einem der vorhergehenden Ansprüche,
**dadurch gekennzeichnet,**
**dass** im mobilen Träger (8) ein von einer Kamera (14, 28) des Trägers (8) aufgenommener Film vor seiner Speicherung auf einem Speichermedium (26) des Trägers (8) abgegriffen, zwischengespeichert (72) und in einer Schleife stets überschrieben wird und ausgelöst durch das Signal (60) das hochaufgelöste Bild aus dem Film aus dem Zwischenspeicher (70) entnommen und als Abbildung der Störung (50, 54, 56, 86) gesendet wird.

8. Verfahren nach einem der vorhergehenden Ansprüche,
**dadurch gekennzeichnet,**
**dass** der Träger (8) mehrere hochaufgelöste Bilder der Störung (50, 54, 56, 86) zusammen mit Geokoordinaten der Aufnahmepunkte der hochaufgelösten Bilder an den Server (42) sendet, aus den hochaufgelösten Bildern mittels Fotogrammetrie ein 3D-Modell des Aufnahmegegenstands erstellt wird und aus den Geokoordinaten die Skalierung des 3D-Modells und der Ort der Störung bestimmt wird.

9. Verfahren nach einem der vorhergehenden Ansprüche,
**dadurch gekennzeichnet,**
**dass** der Träger (8) das System (6) zunächst aus einer größeren Distanz aufnimmt, aus der das gesamte System (6) durch eine Kamera (14, 28) des Trägers (8) abgebildet wird, der Bediener (10) mehrere voneinander räumlich getrennte Störungen (50, 54, 56, 86) erkennt und auf einer Anzeige (38) manuell markiert und die Anzahl der markierten Störungen (50, 54, 56, 86) und ihre räumliche Anordnung zueinander gespeichert werden.

10. Verfahren nach einem der vorhergehenden Ansprüche,
**dadurch gekennzeichnet,**
**dass** der Träger (8) ein bodengebundenes Fahrzeug mit einer Höhenhalterung ist, mit der die Kamera (14) über dem Fahrzeug gehalten ist.

11. Verfahren nach einem der vorhergehenden Ansprüche,
**dadurch gekennzeichnet,**
**dass** das System (6) ein Personensicherheitssystem ist und die Störung (86) zumindest ein Mensch in Gefahr ist.

12. Verfahren nach einem der vorhergehenden Ansprüche,
**dadurch gekennzeichnet,**
**dass** das System (6) ein Personensicherheitssystem ist und die Störung (86) durch zumindest einen Menschen ausgelöst ist und zumindest einen Mensch in Gefahr bringt.

13. Verfahren nach einem der vorhergehenden Ansprüche,
**dadurch gekennzeichnet,**
**dass** der Träger ein Tier ist, das die Kamera mit sich führt.

14. Vorrichtung zum Lokalisieren einer Störung (50, 54, 56, 86) eines Systems (6), umfassend einen mobilen Träger (8) mit einer Kamera (14, 28), einem Speichermedium (26) eingerichtet zum Abspeichern von aufgenommenen hochauflösenden Bildern und einen Sender eingerichtet zum Senden von aus den hochauflösenden Bildern durch Komprimieren zu Grobbildern gewonnener Bildinformation (48) an einen bodengebundenen Server (42),
**gekennzeichnet**
**durch** ein Signalgerät (65) eingerichtet zum Auslösen eines Signals (60)
und zum Senden des Signals (60) an den mobilen Träger (8), und ein Datenmodul (30) des mobilen Trägers (8), das dazu vorbereitet ist, auslöst durch das Signal (60) die Übersendung der aktuellen Geokoordinaten des mobilen Trägers (8) und eines gespeicherten hochaufgelösten Bilds der Störung (50, 54, 56, 86) zu steuern.

## Claims

1. Method for locating a problem (50, 54, 56, 86) in a system (6), in which a mobile carrier (8) having a camera (14, 28) records high-resolution images of the system (6), the high-resolution images are stored in the mobile carrier (8) and image information (48) obtained from the high-resolution images through compression to form low-resolution images is transmitted wirelessly to a ground-based server (42),
**characterized**
**in that** the problem (50, 54, 56, 86) is identified on the basis of the image information sent to the server (42), a signal (60) is triggered by the identification and sent to the mobile carrier (8), where it triggers a high-resolution image of the problem (50, 54, 56, 86), stored in the mobile carrier (8), and geographical coordinates of the mobile carrier (8) being sent to the server (42).

2. Method according to Claim 1,
**characterized**
**in that** the system (6) is a technical facility and the problem (50, 54, 56) is a defect of an element in the facility.

3. Method according to Claim 1 or 2,
**characterized**
**in that** the carrier (8) is controlled by an operator (10) having visual contact with the carrier (8) and the problem (50, 54, 56, 86) is identified by an observer (61) without visual contact with the carrier (8) on the basis of the image information sent to the server (42).

4. Method according to one of the preceding claims,
**characterized**
**in that** the mobile carrier (8) is an unmanned aircraft that flies along or flies over the system (6) and is controlled from the ground by an operator (10), and the problem (50, 54, 56, 86) is found in a building (44) more than one kilometre away from the mobile carrier (8) and the signal (60) is triggered there.

5. Method according to one of the preceding claims,
**characterized**
**in that** the mobile carrier (8) is an unmanned aircraft that autonomously flies along or flies over the system (6) on the basis of a predetermined flight route, and the problem (50, 54, 56, 86) is found by an observer (61) more than one kilometre away from the operator (10) and who triggers the signal (60).

6. Method according to one of the preceding claims,
**characterized**
**in that** the mobile carrier (8) is controlled in terms of its flight via a first data module having a GPS receiver (24) and a transmitter (22) and sends the image information (48) and transmits the geographical coordinates and the image of the problem (50, 54, 56, 86) via a second data module (30), independent of said first data module, having a GPS receiver (34) and a transmitter (32).

7. Method according to one of the preceding claims,
**characterized**
**in that**, in the mobile carrier (8), a film recorded by a camera (14, 28) of the carrier (8), prior to being stored on a storage medium (26) of the carrier (8), is tapped off, buffer-stored (72) and constantly overwritten in a loop, and the high-resolution image from the film is taken from the buffer memory (70) and sent as image of the problem (50, 54, 56, 86) in a manner triggered by the signal (60).

8. Method according to one of the preceding claims,
**characterized**
**in that** the carrier (8) sends a plurality of high-resolution images of the problem (50, 54, 56, 86) together with geographical coordinates of the recording points of the high-resolution images to the server (42), a 3D model of the recorded object is created from the high-resolution images through photogrammetry and the scaling of the 3D model and the location of the problem is determined from the geographical coordinates.

9. Method according to one of the preceding claims,
**characterized**
**in that** the carrier (8) initially records the system (6) from a relatively large distance from which the entire system (6) is imaged by a camera (14, 28) of the carrier (8), the operator (10) identifies a plurality of problems (50, 54, 56, 86) that are spatially separate from one another and marks them manually on a display (38), and the number of marked problems (50, 54, 56, 86) and their spatial arrangement with respect to one another are stored.

10. Method according to one of the preceding claims,
**characterized**
**in that** the carrier (8) is a ground-based vehicle having an elevated holder by way of which the camera (14) is held above the vehicle.

11. Method according to one of the preceding claims,
**characterized**
**in that** the system (6) is a personal safety system and the problem (86) is at least one human in danger.

12. Method according to one of the preceding claims,
**characterized**
**in that** the system (6) is a personal safety system and the problem (86) is triggered by at least one human and puts at least one human in danger.

13. Method according to one of the preceding claims,
**characterized**
**in that** the carrier is an animal carrying the camera.

14. Device for locating a problem (50, 54, 56, 86) in a system (6), comprising a mobile carrier (8) having a camera (14, 28), a storage medium (26) designed to store recorded high-resolution images and a transmitter designed to send image information (48) obtained from the high-resolution images through compression to form low-resolution images to a ground-based server (42), **characterized by** a signalling device (65) designed to trigger a signal (60) and to send the signal (60) to the mobile carrier (8), and a data module (30) of the mobile carrier (8) that is designed to control the transmission of the current geographical coordinates of the mobile carrier (8) and of a stored high-resolution image of the problem (50, 54, 56, 86) in a manner triggered by the signal (60).

## Revendications

1. Procédé de localisation d'un perturbateur (50, 54, 56, 86) d'un système (6), procédé dans lequel un porteur mobile (8) pourvu d'une caméra (14, 28) prend des images à haute résolution du système (6), les images à haute résolution sont mémorisées dans le porteur mobile (8) et l'information d'image (48) obtenue à partir des images à haute résolution par compression sous forme d'images grossières sont transmises sans fil à un serveur au sol (42), **caractérisé en ce que**, sur la base de l'information d'image envoyée au serveur (42), le perturbateur (50, 54, 56, 86) est reconnu, un signal (60) est déclenché par la reconnaissance et est envoyé au porteur mobile (8) où déclenche l'envoi d'une image à haute résolution du perturbateur (50, 54, 56, 86), mémorisée dans le porteur mobile (8), et des coordonnées géographiques du porteur mobile (8) au serveur (42).

2. Procédé selon la revendication 1,
**caractérisé en ce que**
le système (6) est une installation technique et le perturbateur (50, 54, 56) est un défaut d'un élément de l'installation.

3. Procédé selon la revendication 1 ou 2,
**caractérisé en ce que**
le porteur (8) est commandé par un opérateur (10) avec contact visuel avec le porteur (8) et le perturbateur (50, 54, 56, 86) est reconnu par un observateur (61) sans contact visuel avec le porteur (8) sur la base de l'information d'image envoyée au serveur (42).

4. Procédé selon l'une des revendications précédentes,
**caractérisé en ce que**
le porteur mobile (8) est un aéronef sans pilote qui s'approche du système (6) ou le survole et qui est commandé par un opérateur (10) depuis le sol, et le perturbateur (50, 54, 56, 86) est trouvé dans un bâtiment (44) qui est éloigné de plus d'un kilomètre du porteur mobile (8) et où le signal (60) est déclenché.

5. Procédé selon l'une des revendications précédentes,
**caractérisé en ce que**
le porteur mobile (8) est un aéronef sans pilote qui s'approche du système (6) ou le survole de manière autonome sur la base d'un itinéraire de vol prédéterminé, et le perturbateur (50, 54, 56, 86) est trouvé par un observateur (61) qui est éloigné de plus d'un kilomètre de l'opérateur (10) et qui déclenche le signal (60).

6. Procédé selon l'une des revendications précédentes,
**caractérisé en ce que**
le porteur mobile (8) est commandé en vol par un premier module de données pourvu d'un récepteur GPS (24) et d'un émetteur (22) et envoie l'information d'image (48) et transmet les coordonnées géographiques et la reproduction du perturbateur (50, 54, 56, 86) par le biais d'un deuxième module de données indépendant (30) pourvu d'un récepteur GPS (34) et d'un émetteur (32).

7. Procédé selon l'une des revendications précédentes,
caractérisé en que
dans le porteur mobile (8), un film enregistré par une caméra (14, 28) du porteur (8) est capté avant d'être mémorisé sur un support de mémorisation (26) du porteur (8), mémorisé temporairement (72) et toujours écrasé en boucle et l'image à haute résolution est prise sur le film de la mémoire temporaire (70) par déclenchement par le signal (60) et est envoyée comme reproduction du perturbateur (50, 54, 56, 86).

8. Procédé selon l'une des revendications précédentes, **caractérisé en ce que** le porteur (8) envoie au serveur (42) plusieurs images à haute résolution du perturbateur (50, 54, 56, 86) conjointement avec des coordonnées géographiques des points d'enregistrement des images à haute résolution, un modèle 3D de l'objet enregistré est créé par photogrammétrie à partir des images à haute résolution et la mise à l'échelle du modèle 3D et l'emplacement du perturbateur sont déterminés à partir des coordonnées géographiques.

9. Procédé selon l'une des revendications précédentes,
**caractérisé en ce que**
le porteur (8) enregistre le système (6) initialement à une plus grande distance, à partir de laquelle l'ensemble du système (6) est reproduit par une caméra (14, 28) du porteur (8), l'opérateur (10) reconnait plusieurs perturbateurs (50, 54, 56, 86) séparés spatialement les uns des autres et les marque manuellement sur un afficheur (38) et le nombre de perturbateurs marqués (50, 54, 56, 86) et leur disposition spatiale les uns par rapport aux autres sont mémorisés.

10. Procédé selon l'une des revendications précédentes,
**caractérisé en ce que**
le porteur (8) est un véhicule au sol pourvu d'un support en hauteur avec lequel la caméra (14) est maintenue au-dessus du véhicule.

11. Procédé selon l'une des revendications précédentes,
**caractérisé en ce que**
le système (6) est un système de sécurité personnel et le perturbateur (86) est au moins une personne à risque.

12. Procédé selon l'une des revendications précédentes, **caractérisé en ce que** le système (6) est un système de sécurité individuelle et le perturbateur (86) est déclenché par au moins une personne et met au moins une personne en danger.

13. Procédé selon l'une des revendications précédentes,
**caractérisé en ce que**
le porteur est un animal qui porte la caméra.

14. Dispositif de localisation d'un perturbateur (50, 54, 56, 86) d'un système (6), ledit dispositif comprenant un porteur mobile (8) pourvu d'une caméra (14, 28), un support de mémorisation (26) conçu pour mémoriser des images à haute résolution enregistrées et un émetteur conçu pour envoyer à un serveur au sol (42) l'information d'image (48) obtenue à partir des images à haute résolution par compression sous forme d'images grossières,
**caractérisé par** un appareil de signalisation (65) conçu pour déclencher un signal (60) et pour envoyer le signal (60) au porteur mobile (8), et un module de données (30) du porteur mobile (8) qui est adapté pour commander, par déclenchement par le signal (60), des coordonnées géographiques actuelles du porteur mobile (8) et d'une image à haute résolution mémorisée du perturbateur (50, 54, 56, 86).
